(19) Europäisches Patentamt
European Patent Office
Office européen des brevets

(11) **EP 2 422 114 B1**

(12) **FASCICULE DE BREVET EUROPEEN**

(45) Date de publication et mention de la délivrance du brevet:
**20.02.2013 Bulletin 2013/08**

(21) Numéro de dépôt: **10723217.5**

(22) Date de dépôt: **07.04.2010**

(51) Int Cl.:
*F16H 25/20* (2006.01)        *F02K 1/76* (2006.01)

(86) Numéro de dépôt international:
**PCT/FR2010/050667**

(87) Numéro de publication internationale:
**WO 2010/122253 (28.10.2010 Gazette 2010/43)**

(54) **LIMITEUR DE COUPLE NOTAMMENT POUR ACTIONNEUR DE NACELLE DE TURBOREACTEUR D'AERONEF**

DREHMOMENTBEGRENZER, INSBESONDERE FÜR EINEN AKTUATOR DER GONDEL EINES FLUGZEUGTURBOSTRAHLTRIEBWERKS

TORQUE LIMITER IN PARTICULAR FOR AN ACTUATOR OF THE NACELLE OF AN AIRCRAFT TURBOJET ENGINE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **23.04.2009 FR 0901959**

(43) Date de publication de la demande:
**29.02.2012 Bulletin 2012/09**

(73) Titulaire: **Aircelle**
**76700 Gonfreville l'Orcher (FR)**

(72) Inventeur: **MORADELL-CASELLAS, Pierre**
**F-61100 Saint Georges Des Groseillers (FR)**

(74) Mandataire: **Gaillarde, Frédéric F. Ch. et al**
**Cabinet Germain & Maureau**
**8, avenue du Président Wilson**
**75016 Paris (FR)**

(56) Documents cités:
**EP-A- 1 785 346      WO-A-2004/113707**
**US-A- 2 701 478      US-A- 3 704 765**
**US-B1- 6 546 825**

## Description

La présente invention se rapporte à un limiteur de couple notamment pour actionneur de nacelle de turboréacteur d'aéronef.

Une nacelle de turboréacteur d'aéronef comporte de nombreux éléments mobiles, un exemple typique étant celui du capot d'inverseur de poussée à grilles, mobile entre une position dite « jet direct » (position adoptée notamment en vol) et une position dite « jet inversée » (position adoptée lors du freinage à l'atterrissage).

Le déplacement de ces éléments mobiles est couramment obtenu au moyen d'actionneurs électriques tel que celui qui est divulgué dans la demande PCT/US2004/019260, et qui a été représenté à la figure 1 ci annexée.

Un tel actionneur électrique comprend une vis sans fin 1 sur laquelle est vissé un écrou 3, lui-même solidaire d'un tube d'actionnement 5 dont l'extrémité libre se termine par un oeillet 7.

L'oeillet 7 est lui-même fixé à une chape 115 liée à l'élément mobile à déplacer de manière à ce que la rotation et la translation entre la chape 115 et l'oeillet 7 suivant l'axe de déplacement de la vis 1 soient supprimées.

De préférence, des billes 8 sont interposées entre les filets de la vis 1 et ceux de l'écrou 3, de manière à réduire les frottements, de sorte que l'on désigne couramment ce type d'actionneur par « vis à billes ».

La vis 1 comporte, à son extrémité opposée à celle de l'oeillet 7, un pignon 9 à denture oblique coopérant avec un pignon maître 11 lui-même entraîné directement ou indirectement par un moteur électrique.

Sous l'action de ce moteur électrique, on peut faire pivoter la vis 1 dans un sens ou dans l'autre, et ainsi translater l'écrou 3 dans un sens ou dans l'autre, et donc allonger ou rétracter le tube 5, ledit tube 5 étant bloqué en rotation grâce à l'oeillet 7 et la chape 115.

Ces mouvements du tube 5 permettent, par l'intermédiaire de son oeillet 7, d'agir sur l'élément de la nacelle que l'on souhaite déplacer tel qu'un capot d'inverseur de poussée à grilles (étant entendu qu'il y a en général plusieurs actionneurs de ce type pour mouvoir un tel capot).

Si, pour certaines raisons, la vitesse de déploiement du tube 5 est mal contrôlée à la fin de sa course d'allongement, il peut y avoir une arrivée en butée assez brutale de l'élément actionné tel qu'un capot d'inverseur.

Or, l'ensemble du mécanisme de mise en mouvement du tube 5 (moteur électrique, pignons, vis sans fin, écrou, etc.) possède une inertie importante, et l'arrivée en butée brutale du capot d'inverseur peut avoir pour conséquence que certaines pièces de l'actionneur et du capot, et notamment des pièces situées dans la zone de liaison de l'extrémité du tube 5 avec le capot, soient endommagées.

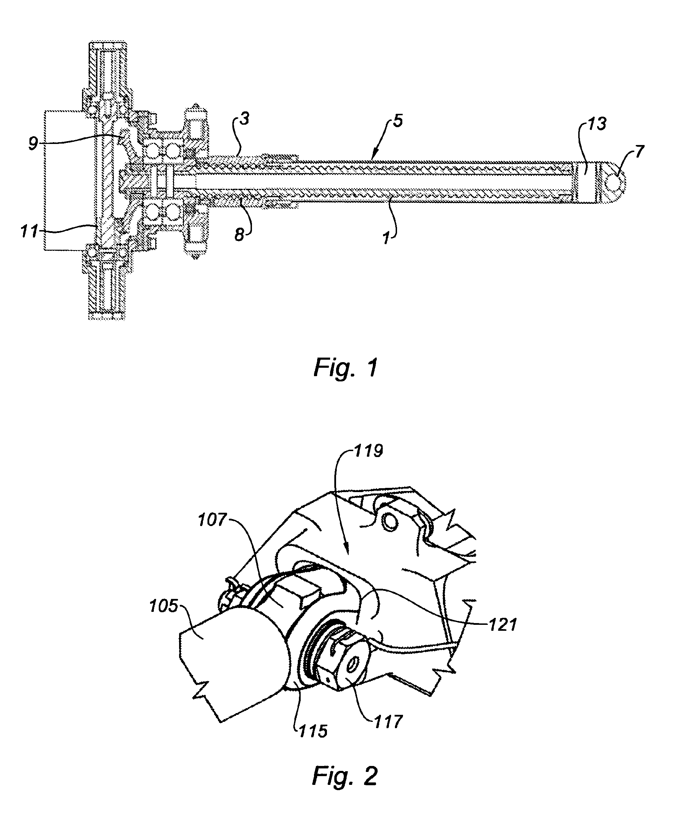

Pour cette raison, il est connu de placer un limiteur de couple 13 par exemple au voisinage de l'extrémité libre du tube 5, c'est-à-dire juste avant l'oeillet 7, comme cela est représenté sur la figure 1 ci-annexée.

Le fait de placer un tel limiteur de couple le plus « en aval » possible sur la chaîne cinématique de l'actionneur par rapport au générateur de couple que constitue le moteur électrique, permet de protéger au mieux l'ensemble des pièces de l'actionneur et du capot en cas de butée brutale de l'élément actionné (capot d'inverseur par exemple).

Concrètement, lorsqu'une telle butée brutale se produit, l'énergie cinétique emmagasinée par l'ensemble des pièces mobiles de l'actionneur peut se dissiper par friction ou déformation des organes formant le limiteur de couple 13, selon la nature de ce limiteur.

A noter que ce limiteur peut être du type à bille et à ressort, à cisaillement d'ergot, à dent, à glissement, etc.

Dans tous les cas, un tel limiteur de couple est complexe, encombrant, lourd et difficile à calibrer avec précision.

La présente invention a notamment pour but de remédier à ces inconvénients.

On atteint ce but de l'invention avec un limiteur de couple pour actionneur du type comprenant une vis, un écrou monté sur cette vis, un tube d'actionnement solidaire de cet écrou et des moyens d'entraînement en rotation de cette vis, ce limiteur étant remarquable en ce qu'il comprend une butée apte à : butée

- empêcher la rotation dudit tube (105) par frottement sous le seul effet d'un effort axial exercé par ladite vis (101) sur ledit écrou lors de son déplacement, et à
- autoriser la rotation dudit tube lorsque ledit écrou rencontre une butée axiale de ladite vis au-delà d'un seuil de couple prédéterminé défini par l'effort axial.

Le fonctionnement de ce limiteur de couple repose sur le fait que la mise en rotation de la vis de l'actionneur a pour effet d'exercer un effort axial sur ledit écrou, ayant tendance à plaquer ledit tube contre ladite butée, et sur le fait que ce placage à pour effet d'engendrer un couple de friction de la butée sur le tube, s'opposant au couple qu'exerce l'écrou sur ce tube.

Tant que le couple exercé par la butée est supérieur à celui exercé par l'écrou, le tube demeure fixe en rotation, et peut continuer de se déplacer sous l'effet de la rotation de la vis sans fin.

En revanche, quand le couple exercé par l'écrou devient supérieur à celui exercé par la butée sous effort, le tube peut pivoter de concert avec la vis sans fin. C'est ce qui arrive quand l'actionneur arrive sur sa butée de fin de course sous l'effet de l'énergie cinétique accumulée par l'inertie, provoquant alors la rotation glissante de la butée et donc du tube, qui ne se déplace plus en translation.

On comprend donc qu'en choisissant convenablement les caractéristiques géométriques, de matériau et d'état de surface pour la butée, on peut garantir un couple de friction de la butée nécessaire au déplacement en translation du tube tout en limitant le seuil de déclenchement en couple du limiteur lors des butées axiales de l'actionneur.

On réalise de la sorte un limiteur de couple très simple, peu encombrant, fiable et facile à calibrer.

Suivant d'autres caractéristiques optionnelles du limiteur de couple selon l'invention :

- ladite butée comprend une surface de friction de forme sensiblement annulaire, laquelle présente des rayons intérieur (Ri) et extérieur (Re) satisfaisant à la relation suivante :

$$\frac{2}{3} \bullet \frac{\left(\mathrm{Re}^2 - Ri^2\right)}{\mathrm{Re}^3 - Ri^3} \bullet Cf \succ \frac{P}{2 \cdot \pi \cdot \rho}$$

où :

- Cf est le coefficient de frottement de ladite surface de friction,
- P est le pas de la vis de l'actionneur,
- p est le rendement du mouvement de l'écrou sur sa vis ;

cette relation particulière définit les caractéristiques géométriques d'une butée annulaire pouvant convenir pour la mise en oeuvre de l'invention, étant entendu que plus le terme de gauche de l'inéquation ci-dessus sera grand par rapport au terme de droite, plus le limiteur de couple se déclenchera pour une résistance axiale externe (c'est-à-dire provoquée par des éléments extérieurs à l'actionneur) élevée ;

Ce limiteur de couple comprend des moyens de maintien en friction de ladite butée sur ledit tube en dehors des phases de fonctionnement dudit actionneur : ces moyens de maintien en contact, qui dans le cadre de la présente invention ne doivent pas être assimilés à des moyens de précontrainte permanents comme on peut en trouver dans les actionneurs de la technique antérieure, permettent de garantir que la fonction de friction de la butée pourra s'exercer dès le début de la mise en rotation de la vis sans fin. En effet, avant que cette vis ne se mette en rotation et sous effort externe nul, aucun effort axial n'est exercé par l'écrou sur le tube et donc par le tube sur la butée, de sorte qu'il pourrait arriver que l'amorçage du mouvement du tube ne puisse se produire : les moyens de contact susmentionnés, qui en pratique peuvent prendre la forme de petits ressorts maintenant la butée en état de friction, permettent de s'affranchir de ce risque de défaut d'amorçage.

Il est bien entendu que tout autre moyen capable de retenir un faible couple d'amorçage (tel qu'une goupille de cisaillement, bille d'indexage, etc, par exemple) pourrait répondre à cette même problématique.

La présente invention se rapporte encore à une chape de fixation dudit tube sur un élément mobile de nacelle d'aéronef, remarquable en ce qu'elle incorpore un limiteur de couple conforme à ce qui précède : ce mode de réalisation correspond au cas où le limiteur de couple n'est pas incorporé à l'actionneur à proprement parler, mais à une chape de fixation montée sur l'élément à actionner (tel qu'un capot d'inverseur de poussée).

La présente invention se rapporte encore à un actionneur du type comprenant une vis, un écrou monté sur cette vis, un tube d'actionnement solidaire de cet écrou et des moyens d'entraînement en rotation de cette vis, remarquable en ce qu'il comprend un limiteur de couple conforme à ce qui précède, placé entre ledit écrou et l'extrémité libre dudit tube : ce mode de réalisation correspond au cas où le limiteur est placé de manière analogue à ce qui est visible sur la figure 1 commentée ci-dessus.

Suivant une caractéristique optionnelle de cet actionneur, il comprend des moyens électriques de mise en rotation de ladite vis.

La présente invention se rapporte également à un inverseur de poussée pour nacelle d'aéronef, remarquable en ce qu'il comprend un capot mobile entre une position jet direct et une position jet inversé, et au moins un actionneur conforme à ce qui précède.

D'autres caractéristiques et avantages de la présente invention apparaîtront à la lumière de la description qui va suivre et à l'examen des figures ci-annexées dans lesquelles :

- la figure 1 est une vue en coupe axiale d'un actionneur électrique de la technique antérieure,
- la figure 2 est une vue en perspective de la zone de coopération de l'extrémité d'un actionneur selon l'invention avec la ferrure d'un capot d'inversion de poussée, dans un mode de réalisation où le limiteur de couple est interposé entre une chape de fixation du tube de l'actionneur et l'élément mobile à actionner,
- la figure 3 est une vue schématique de la manière dont coopèrent les pièces représentées à la figure 2, et
- la figure 4 est une vue schématique en coupe axiale d'un actionneur électrique selon l'invention, comprenant un verrou de blocage de la translation de ce tube.

Sur l'ensemble de ces figures, des références identiques ou analogues (à une centaine près) désignent des organes ou ensembles d'organes identiques ou analogues.

La figure 1 représente un actionneur électrique de la technique antérieure, pour inverseur de poussée de nacelle d'aéronef.

Cet actionneur a été décrit de manière détaillée dans le préambule de la présente description.

On se reporte à présent à la figure 2, sur laquelle on peut voir l'extrémité libre du tube 105 d'un actionneur électrique à vis à billes selon l'invention.

L'extrémité de ce tube 105 comporte un oeillet 107 qui coopère avec une chape 115 fixée sur cet oeillet par une vis boulonnée 117.

La chape 115, qui présente sensiblement la forme d'un étrier apte à venir enserrer l'oeillet 107, est elle-même montée pivotante par rapport à une ferrure 119 solidaire d'un élément mobile d'une nacelle d'aéronef, tel qu'un capot d'inversion de poussée.

La ferrure 119, qui est en fait une partie renforcée de l'élément mobile, comporte une cavité 121 à l'intérieur de laquelle est montée la chape 115.

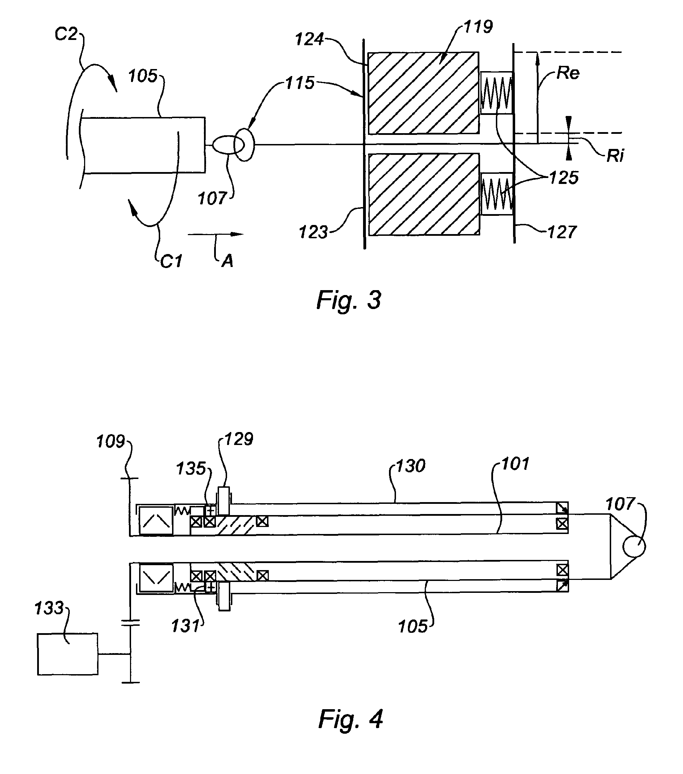

Plus précisément, la figure 3 permet de comprendre les liaisons cinématiques en jeu.

Cette figure 3 montre d'une part que la chape 115 est effectivement montée pivotante à l'intérieur de la ferrure 119, mais également que cette chape comporte une partie de friction 123 apte à frotter en rotation contre une surface 124 de forme sensiblement annulaire de la ferrure 119.

La chape 115 comprend également une partie d'appui 127 de géométrie sensiblement identique à la surface 123 permettant ainsi d'assurer un fonctionnement du limiteur sensiblement équivalent dans les deux sens d'effort. Entre cette partie d'appui et la ferrure 119 sont disposés des ressorts de maintien en contact 125.

Ces ressorts, de faible effort, sont dimensionnés de manière juste suffisante pour assurer un léger appui de la partie de friction 123 de la chape 115 contre la surface 124 de la ferrure 119 ; il ne s'agit nullement de ressorts de précontrainte au sens où on l'entend dans les limiteurs de couple classiques, c'est-à-dire des ressorts exerçant des efforts importants susceptibles de n'être vaincus qu'en configuration de limitation de couple.

Bien que cela ne soit pas visible sur les figures 2 et 3, les moyens d'entraînement du tube 105 de l'actionneur selon l'invention sont analogues à ceux de l'entraînement du tube 5 de l'actionneur de l'art antérieur représenté à la figure 1.

Le mode de fonctionnement et les avantages du dispositif qui vient d'être décrit sont les suivants.

Lorsque la vis à billes se met en rotation sous l'effet du moteur électrique associé en vue d'allonger le tube 105, l'oeillet 107 de ce tube 105 exerce un effort axial A sur la chape 115, comme cela est représenté sur la figure 3.

Cet effort axial a pour effet immédiat de plaquer la partie de friction 123 de la chape 115 contre la surface 124 de la ferrure 119. De part ce contact de la partie de friction 123 sur cette surface 124, la chape 115 exerce sur le tube 105 un couple de friction C1 opposé au couple C2 qu'exerce l'écrou de la vis à billes sur ce tube.

Si le couple de friction C1 est supérieur au couple de friction C2, le tube 105 ne peut pas pivoter par rapport à la ferrure 119, de sorte que l'écrou de l'actionneur est immobile en rotation par rapport à la vis à billes, permettant ainsi le mouvement d'allongement du tube sous l'effet de la rotation de cette vis.

Lorsque la course de la vis à billes est bloquée à l'intérieur de l'actionneur de manière brutale, notamment en fin de course par exemple, le couple C2 engendré par l'écrou de l'actionneur peut devenir supérieur au couple de friction C1 engendré par la chape 115 sur le tube 105, entraînant ainsi la rotation de cette chape par rapport à la ferrure 119, et donc la dissipation, par frottement de la partie de friction 123 sur la surface 124 de la ferrure119, de l'énergie cinétique transmise par l'actionneur.

Cette dissipation d'énergie permet de prévenir tout endommagement de l'actionneur ainsi que des pièces de liaison de cet actionneur (chape 115, ferrure 119) au capot d'inversion de poussée.

Très concrètement, lorsque la zone de coopération de la partie de friction 123 de la chape 115 avec la surface 124 de la ferrure 119 présente sensiblement une forme annulaire du rayon intérieur Ri et de rayon extérieur Re, comme cela est représenté sur la figure 3, la condition selon laquelle le couple de friction C1 est supérieur au couple C2 engendré par l'écrou, permettant ainsi le déplacement du tube 105 sous l'effet de la rotation de la vis à bille, s'écrit :

$$\frac{2}{3} \bullet \frac{\left(\mathrm{Re}^2 - Ri^2\right)}{\mathrm{Re}^3 - Ri^3} \bullet Cf \succ \frac{P}{2 \cdot \pi \cdot \rho}$$

En effet :

$$C1 = \frac{2}{3} \bullet \frac{\left(\mathrm{Re}^2 - Ri^2\right)}{\mathrm{Re}^3 - Ri^3} \bullet Cf \bullet F$$

et

$$C2 = \frac{P}{2 \cdot \pi \cdot \rho} \bullet F$$

où :

- F représente l'effort axial (c'est-à-dire selon la direction A visible sur la figure 3) transmis par la vis à l'écrou,
- Cf indique le coefficient de frottement de la surface de friction 124 de la ferrure 119,
- P désigne le pas de la vis à billes de l'actionneur, et
- $\rho$ désigne le rendement de la vis à bille.

Bien entendu, plus C1 sera élevé par rapport à C2, plus le seuil de couple de déclenchement sous effort axial externe sera élevé, actionneur en butée axiale interne.

On comprend donc qu'en jouant notamment sur la géométrie de la zone de contact entre la ferrure 119 et la partie de friction 123, ainsi que sur les matériaux respectifs de ces deux organes, on pourra placer le couple C2 juste supérieur au couple C1 pour limiter le seuil de déclenchement.

La fonction des ressorts de maintien en contact 125 est uniquement de s'assurer que la partie de friction 123 de la chape 115 est en permanence en contact avec la ferrure 119, et notamment lorsque l'actionneur est inactif, et donc que le tube 105 n'exerce aucun effort axial sur la chape 115 : dans ce cas particulier, en l'absence des ressorts 125, il se pourrait qu'il n'y ait pas de contact entre la partie 123 et la ferrure 119, auquel cas il ne pourrait y avoir aucun frottement entre ces deux parties, autorisant ainsi le pivotement du tube 105 de concert avec la vis à billes, et donc l'immobilisation en translation de ce tube 105.

On comprend donc que ces ressorts de maintien en contact 125, de par leur faible raideur, n'ont aucune fonction de précontrainte analogue à celle que l'on trouve dans les limiteurs de couple de la technique antérieure, et notamment dans les limiteurs de couple tels qu'enseignés par le document PCT/US2004/019260 tel que décrit plus haut.

On comprend à la lumière de la description qui précède que le limiteur de couple selon l'invention est d'une conception extrêmement rudimentaire, et par conséquent d'une grande fiabilité.

Un simple choix de matériau et de géométrie appropriés pour les pièces en cause permet de déterminer le seuil d'effort axial externe à partir duquel on souhaite que le limiteur de couple entre en action pour limiter la déformation ou la destruction des pièces concernées.

Bien entendu, le limiteur de couple tel que décrit ci-avant pourrait être placé à d'autres endroits de l'actionneur, et notamment en extrémité d'actionneur, comme c'était le cas pour le dispositif de la technique antérieure représenté à la figure 1.

Il va cependant de soi que plus le limiteur de couple est éloigné du moteur électrique dans la chaîne cinématique de l'actionneur, plus on réduit le risque de déformation de pièces en cas d'arrêt brutal, notamment en fin de course, de l'élément à actionner (capot mobile, inverseur de poussée par exemple).

La figure 4 illustre une application possible du limiteur de couple qui vient d'être décrit à un actionneur électrique à vis à billes équipé d'un système de blocage 129 du tube 105 en position rétractée.

Comme cela est connu en soi, un tel système de blocage 129, solidaire d'un carter 130 et souvent désigné par PLS (Primary Locking System, c'est-à-dire système de verrouillage primaire) peut coopérer avec une collerette 131 du tube 105, de manière à maintenir celui-ci dans la position rétractée représentée à la figure 4.

Ce système de verrouillage permet d'éviter toute ouverture intempestive de l'élément actionné (par exemple capot d'inverseur de poussée), notamment lorsque l'aéronef est en vol.

On peut prévoir de placer un limiteur de couple conformément à l'enseignement des figures 2 et 3, c'est-à-dire par exemple dans la chape destinée à coopérer avec l'oeillet 107.

La présence d'un tel limiteur de couple permet d'éviter qu'en cas de mise en route intempestive du moteur électrique 133 de l'actionneur, la collerette 131 du tube 105 ne vienne détruire le système de verrouillage 129 : en effet, le limiteur de couple selon l'invention permet, le cas échéant, la mise en rotation du tube 105 de concert avec la vis sans fin 101, et ainsi le blocage du mouvement en translation du tube 105, et donc la suppression des efforts axiaux exercés par ce tube via sa collerette 131 sur le système de verrouillage 129.

On notera que dans cette application particulière, il convient de placer un palier à roulement 135 entre la collerette 131 et le système de verrouillage 129, de manière à éviter les frottements parasites susceptibles de modifier le calibrage du limiteur de couple.

Bien entendu, la présente invention n'est nullement limitée au mode de réalisation décrit et représenté, fourni à titre de simple exemple.

## Revendications

1. Limiteur de couple pour actionneur du type comprenant une vis (101), un écrou monté sur cette vis, un tube d'actionnement (105) solidaire de cet écrou et des moyens d'entraînement en rotation (109, 133) de cette vis, ce limiteur étant **caractérisé en ce qu'**il comprend une butée (115, 119) apte à :

   - empêcher la rotation dudit tube (105) par frottement sous le seul effet d'un effort axial exercé par ladite vis (101) sur ledit écrou lors de son déplacement, et à
   - autoriser la rotation dudit tube (105) lorsque le couple exercé par l'écrou devient supérieur à celui exercé par ladite butée.

2. Limiteur de couple selon la revendication 1, **caractérisé en ce que** ladite butée (115, 119) présente une surface de friction sensiblement annulaire (124), laquelle présente des rayons intérieur Ri et extérieur Re satisfaisant à la relation suivante :

$$\frac{2}{3} \bullet \frac{(\text{Re}^2 - Ri^2)}{\text{Re}^3 - Ri^3} \bullet Cf \succ \frac{P}{2 \cdot \pi \cdot \rho}$$

où :

   - Cf est le coefficient de frottement de ladite surface de friction (124),
- P est le pas de la vis de l'actionneur,
- p est le rendement du mouvement de l'écrou sur sa vis.

**3.** Limiteur de couple selon l'une quelconque des revendications précédentes, **caractérisé en ce qu'**il comprend des moyens (125) de maintien en friction de ladite butée (115, 119) sur ledit tube (105) en dehors des phases de fonctionnement dudit actionneur.

**4.** Chape de fixation (115) dudit tube (105) sur un élément mobile de nacelle d'aéronef, **caractérisée en ce qu'**elle incorpore un limiteur de couple conforme à l'une quelconque des revendications précédentes.

**5.** Actionneur du type comprenant une vis (101), un écrou monté sur cette vis, un tube d'actionnement (105) solidaire de cet écrou et des moyens d'entraînement en rotation (109, 133) de cette vis, **caractérisé en ce qu'**il comprend un limiteur de couple conforme à l'une quelconque des revendications 1 à 3, placé entre ledit écrou et l'extrémité libre dudit tube.

**6.** Actionneur selon la revendication 5, **caractérisé en ce qu'**il comprend des moyens électriques (133) de mise en rotation de ladite vis (101).

**7.** Inverseur de poussée pour nacelle d'aéronef, **caractérisé en ce qu'**il comprend un capot mobile entre une position jet direct et une position jet inversé, et au moins un actionneur conforme à l'une des revendications 5 ou 6.

**Claims**

**1.** A torque limiter for an actuator, of the type comprising a screw (101), a nut mounted on this screw, an actuation tube (105) firmly secured to this nut, and means (109, 133) for driving this screw into rotation, this limiter being **characterized in that** it comprises an abutment (115, 119) capable of:

- preventing the rotation of said tube (105) by friction under the sole effect of an axial force exerted by said screw (101) on said nut during its displacement, and
- allowing the rotation of said tube (105) when the torque exerted by the nut is greater than the one exerted by said abutment.

**2.** The torque limiter according to claim 1, **characterized in that** said abutment (115, 119) has a substantially ring-shaped friction surface (124), which has inner Ri and outer Re radii satisfying the following relationship:

$$\frac{2}{3} \bullet \frac{\left(\mathrm{Re}^2 - Ri^2\right)}{\mathrm{Re}^3 - Ri^3} \bullet Cf \prec \frac{P}{2 \cdot \pi \cdot \rho}$$

wherein:

- Cf is the friction coefficient of said friction surface (124),
- P is the thread pitch of the screw of the actuator,
- p is the performance of the movement of the nut on its screw.

**3.** The torque limiter according to any of the preceding claims, **characterized in that** it comprises means (125) for maintaining friction of said abutment (115, 119) on said tube (105) outside the operating phases of said actuator.

**4.** A yoke (115) for attaching said tube (105) on a mobile aircraft nacelle element, **characterized in that** it incorporates a torque limiter according to any of the preceding claims.

**5.** An actuator of the type comprising a screw (101), a nut mounted on this screw, an actuation tube (105) firmly secured to this nut and means (109, 133) for driving this screw into rotation, **characterized in that** it comprises a torque limiter according to any of the claims 1 to 3, placed between said nut and the free end of said tube.

**6.** The actuator according to claim 5, **characterized in that** it comprises electric means (133) for setting said screw (101) into rotation.

**7.** A thrust reverser for an aircraft nacelle, **characterized in that** it comprises a mobile cowl between a direct jet position and a reversed jet position, and at least one actuator according to one of claims 5 or 6.

**Patentansprüche**

**1.** Drehmomentbegrenzer für Aktuator der Bauart, der eine Schraube (101), eine auf dieser Schraube montierte Mutter, ein mit dieser Mutter verbundenes Betätigungsrohr (105) und Rotationsantriebsmittel (109, 133) dieser Schraube umfasst, wobei dieser Begrenzer **dadurch gekennzeichnet ist, dass** er einen Anschlag (115, 119) umfasst, der imstande ist:

- die Rotation des Rohrs (105) durch Reibung einzig und allein durch die Wirkung einer axialen Kraft, die von der Schraube (101) auf die Mutter während ihrer Verlagerung ausgeübt wird, zu verhindern, und
- die Rotation des Rohrs (105) zu erlauben, wenn das von der Mutter ausgeübte Drehmoment größer wird als das, was vom Anschlag ausgeübt wird.

2. Drehmomentbegrenzer nach Anspruch 1, **dadurch gekennzeichnet, dass** der Anschlag (115, 119) eine etwa ringförmige Reibefläche (124) aufweist, die einen Innenradius Ri und einen Außenradius Re aufweist, die die folgende Beziehung erfüllen:

$$\frac{2}{3} \bullet \frac{\left(\text{Re}^2 - Ri^2\right)}{\text{Re}^3 - Ri^3} \bullet Cf \succ \frac{P}{2 \cdot \pi \cdot \rho}$$

wobei:

 - Cf der Reibungskoeffizient der Reibefläche (124) ist,
 - P die Steigung der Schraube des Aktuators ist,
 - p der Wirkungsgrad der Bewegung der Mutter auf die Schraube ist.

3. Drehmomentbegrenzer nach einem der vorangehenden Ansprüche, **dadurch gekennzeichnet, dass** er Mittel (125) zum Aufrechterhalten der Reibung des Anschlags (115, 119) auf das Rohr (105) außerhalb der Betriebsphasen des Aktuators umfasst.

4. Befestigungsbügel (115) des Rohrs (105) auf einem bewegbaren Element einer Flugzeuggondel, **dadurch gekennzeichnet, dass** er einen Drehmomentbegrenzer nach einem der vorangehenden Ansprüche einschließt.

5. Aktuator der Bauart, der eine Schraube (101), eine auf dieser Schraube montierte Mutter, ein mit dieser Mutter verbundenes Betätigungsrohr (105) und Rotationsantriebsmittel (109, 133) dieser Schraube umfasst, **dadurch gekennzeichnet, dass** er einen Drehmomentbegrenzer nach einem der Ansprüche 1 bis 3 umfasst, der zwischen der Mutter und dem freien Ende des Rohrs angeordnet ist.

6. Aktuator nach Anspruch 5, **dadurch gekennzeichnet, dass** er elektrische Mittel (133) umfasst, um die Schraube (101) in Rotation zu versetzen.

7. Schubumkehr für Flugzeuggondel, **dadurch gekennzeichnet, dass** sie eine zwischen einer Direktstrahlposition und einer Umkehrstrahlposition bewegbare Abdeckung und mindestens einen Aktuator nach einem der Ansprüche 5 oder 6 umfasst.

**Fig. 1**

**Fig. 2**

Fig. 3

Fig. 4

**RÉFÉRENCES CITÉES DANS LA DESCRIPTION**

**Documents brevets cités dans la description**

- US 2004019260 W